# EUROPEAN PATENT APPLICATION

(11) **EP 3 988 231 A1**
(43) Date of publication of application: **27.04.2022**
(21) Application number: 20203495.5
(22) Date of filing: 23.10.2020
(51) Int. Cl.: B22F 10/20, B22F 10/322, B22F 10/368, B22F 10/80, B22F 12/17, B22F 12/20, B22F 12/90, B29C 64/386, B29C 64/393, B33Y 10/00, B33Y 30/00, B33Y 50/00, B33Y 50/02

(54) **3D PRINTING METHOD WITH ADVANCED GAS FLOW**

(71) Applicant: Siemens Energy Global GmbH & Co. KG, 81739 München (DE)
(72) Inventor: Lindstam, Johan, SE-60371 Norrköping (SE)

(57) **Abstract**

The present invention refers to a method of utilizing a 3D printer to improve the insight in the gas flow characteristics and the possibilities to predict and optimize 3D prints provided by such 3D printer. Furthermore, the present invention refers to a computer program product utilized to execute such method. Additionally, the present invention refers to a base plate beneficially utilized herein. Additionally, the present invention refers to a 3D printing device adapted to realize such method. Furthermore, the present invention refers to a control device utilized for such method. Additionally, the present invention refers to an upgrade kit containing such control device. Furthermore, the present invention refers to a use of a temperature profile acquired by an inventive method to adapt a 3D printing process.

## Description

The present invention refers to a method of utilizing a 3D printer to improve the insight and possibilities provided by a 3D printer. Furthermore, the present invention refers to a computer program product utilized to execute such method. Additionally, the present invention refers to a base plate beneficially utilized in such method. Furthermore, the present invention refers to a 3D printing device adapted to realize such method. Additionally, the present invention refers to a control device utilized for such method. Furthermore, the present invention refers to an upgrade kit containing such control device. Additionally, the present invention refers to a use of a temperature profile acquired by an inventive method to adapt a 3D printing process.

Additive manufacturing is a very flexible method of manufacturing utilizing building up a product by adding material on an existing part or right from the scratch. In recent years the possibilities significantly improved and this new method of manufacturing products has been introduced into industrial processes. Especially, the possibility to build up structures utilizing geometries not possible using conventional methods of manufacturing significantly increases the benefit provided here with. Methods like 3D printing, for example, utilize a metal or metal composition powder being melted layer by layer to manufacture a complex 3D structure. Despite the high flexibility provided with such method, certain requirements are still to be considered. For example, the more the limits of 3D printing are utilized the more former minor deviations and formerly irrelevant problems become limiting factors significantly narrowing the possibilities to keep up with the increasingly sophisticated targets and the still available limits. Providing improvements of 3D printing devices and methods to continuously extend the limits is, therefore, a major problem.

These problems are solved by the products and methods as disclosed hereafter and in the claims. Further beneficial embodiments are disclosed in the dependent claims and the further description. These benefits can be used to adapt the corresponding solution to specific needs or to solve further problems.

According to a first aspect the present invention refers to a method of utilizing a 3D printer, wherein the method contains the step of providing a 3D printer containing a plate, a gas supply unit and an IR sensor, wherein the base plate contains a heating device and a 3D building surface, wherein the heating device is adapted to provide a defined temperature of the 3D printing surface of the base plate, wherein the gas supply unit is adapted to provide a gas flow near the base plate, wherein IR sensor is adapted to monitor a temperature within an area of the 3D printing surface of the base plate, wherein the method contains the step of measuring the temperature within the area of the 3D printing surface to provide a temperature profile while providing a gas stream through the gas supply unit.

According to a further aspect the present invention refers to a computer program product, tangibly embodied in a machine-readable storage medium, including instructions operable to cause a computing entity to execute an inventive method.

According to a further aspect the present invention refers to a base plate, wherein the base plate contains at least one heat distribution layer located within a 3D printing surface of the base plate, at least one heat conduction layer below the at least one heat distribution layer, and at least one heating layer below the at least one heat conduction layer, wherein the heating layer is adapted to convert electricity into heat, wherein the heat conduction layer is adapted to transmit heat from the heating layer to the heat distribution layer, wherein the heat distribution layer is adapted to distribute the heat evenly across the 3D printing surface of the base plate.

According to a further aspect the present invention refers to a 3D printing device containing a base plate, a gas supply unit and an IR sensor, wherein the base plate contains a heating device and a 3D building surface, wherein the heating device is adapted to provide a defined temperature of the 3D printing surface of the base plate, wherein the gas supply unit is adapted to provide a gas flow near the base plate, wherein IR sensor is adapted to monitor the temperature of the 3D printing surface of the base plate.

According to a further aspect the present invention refers to a control device of an 3D printing device, wherein the control device is adapted to execute an inventive method or an inventive computer program product.

According to a further aspect the present invention refers to an upgrade kit containing an inventive control device.

According to a further aspect the present invention refers to a use of a temperature profile of a surface within the area of the 3D printing surface acquired by an inventive method, wherein the temperature profile is utilized to adapt a 3D printing process and/or a gas flow provided by the gas supply unit.

To simplify understanding of the present invention it is referred to the detailed description hereafter and the figures attached as well as their description. Herein, the figures are to be understood being not limiting the scope of the present invention, but disclosing preferred embodiments explaining the invention further.
Fig. 1 shows a schematic sideview of an inventive base plate utilized in an inventive 3D printing device.
Fig. 2 shows a schematic cross section through the 3D printing surface area of the base plate shown in figure 1.
Fig. 3 shows a schematic cross section through the 3D printing surface area of the base plate shown in figure 1, wherein specific functional elements contained in the layers of figure 2 are shown.

Preferably, the embodiments hereafter contain, unless specified otherwise, at least one processor and/or data storage unit to implement the inventive method.

According to one aspect the present invention refers to a method as specified above.

According to a first aspect the present invention refers to a method of utilizing a 3D printer, wherein the method contains the step of providing a 3D printer containing a plate, a gas supply unit and an IR sensor, wherein the base plate contains a heating device and a 3D building surface, wherein the heating device is adapted to provide a defined temperature of the 3D printing surface of the base plate, wherein the gas supply unit is adapted to provide a gas flow near the base plate, wherein IR sensor is adapted to monitor a temperature within an area of the 3D printing surface of the base plate, wherein the method contains the step of measuring the temperature within the area of the 3D printing surface to provide a temperature profile while providing a gas stream through the gas supply unit.

Herein, for example, the temperature of the 3D printing surface or a correspondingly selected surface placed on top of the 3D printing surface. The corresponding surface to be measured is typically placed in a position resulting in the surface to be measured being in the height of a powder layer utilized in the 3D printing device to manufacture a product. It has to be noted that the base plate does not need to be the build plate later to be utilized during the 3D printing. The inventive method can utilize a removable base plate for acquiring the temperature profile that is exchanged to a build plate utilized for 3D printing before starting the 3D printing. Alternatively, the inventive base plate can remain in the 3D printer and a build plate is attached to said base plate before starting the printing process. The two aforementioned possibilities are typically preferred. However, the base plate can also be utilized as build plate to directly build. Such method is also beneficial for specific embodiments like in case highly precise print tasks are to be performed, requiring, for example, a highly precise manufacturing right from the start.

According to further embodiments it is preferred that the base plate provides an emissivity within the area of the 3D printing surface being selected from the range from 0.5 to 1, more preferred from 0.8 to 1, even more preferred from 0.9 to 1.
The emissivity is preferably measure according to DIN EN ISO 9288:1996-08.

According to further embodiments it is preferred that the area of the 3D printing surface at least partially, more preferred to at least 50%, even more preferred at least 90%, even more preferred totally, consists of a non-metal. For example, such surface can consist of a semiconductor material or a glass fiber material embedded within a resin. Typically, it is preferred that the surface consists of a material consists of a material providing a lower heat conductivity than a next material below said material within the base plate. Utilizing such material is very beneficial for typical embodiments as it provides a good heat distribution at the surface being beneficial for typical temperature measurements.

According to further embodiments it is preferred that the method contains the step of comparing the temperature profile with a simulated temperature profile or historic temperature profile.

Typically, such simulated temperature profile or historic temperature profile refers to the same 3D printer. However, it can also be a temperature profile of a different 3D printer. Such comparison can be utilized to calibrate the 3D printer to provide comparable manufacturing conditions. Also it can be additionally or alternatively utilized to adapt the manufacturing instructions utilized by the 3D printer to manufacture the product. For example, for reproducing a 3D printing process on a different 3D printer it is typically preferred to adapt the conditions shown by the temperature profile as much as possible utilizing the available means provided by a gas supply unit. Remaining differences are compensated by adapting the manufacturing instructions to enable a high quality reproduction of past 3D printing processes.

According to further embodiments it is preferred that the method contains the step of heating up the 3D printing surface and providing a stable temperature distribution of the 3D printing surface before the step of measuring the temperature within the area of the 3D printing surface is executed. Although, such method requires additional time to be executed it provides a very reliable method to determine the cooling resulting from the gas flow. Also, it can be ruled out that, for example, damages of single heating elements contained in the base plate might result in incorrect results.

According to further embodiments it is preferred that the method contains the step of continuously heating the 3D printing surface during the measurement of the temperature within the area of the 3D printing surface. Providing such continuous heating is surprisingly beneficial to enable the cooling resulting from the gas flow to realize a surface pattern to be easily and reliable be detected by an IR sensor. For example, it becomes possible to utilize lower quality IR sensors being able to detect only higher differences of the temperature in a sufficient reliability. Also, it becomes possible to negate minor deviations resulting from temporary inhomogeneities of the gas flow.

According to furthermore embodiments it is preferred that the continuous heating is adapted to improve the data received by the IR sensor. For example, some feedback loop or base plate specific continuous heating allows to provide a slowed down cool down of the base plate providing very good data regarding the cooling effect of the gas flow while not slowing down the measurement for too long.

According to further embodiments it is preferred that the method contains the step of determining a local cooling factor of the gas stream within the area of the 3D printing surface, wherein the local cooling factor is utilized during a later 3D printing process to adapt an energy input resulting from the 3D printing. For example, such energy input results from the energy beam utilized to melt powder layers to 3D print a product. This allows to surprisingly improve the manufacturing process of highly sophisticated design requiring highest quality manufacturing processes.

According to further embodiments it is preferred that the heating device of the base plate is adapted to provide a homogeneous heating of the 3D printing surface of the base plate. While inhomogeneous heating up of the 3D printing surface area can also be corrected during analysis utilizing such homogeneous heated surface is significantly increasing the quality of corresponding analysis taking into account the simplified process of processing the data acquired.

According to further embodiments it is preferred that the gas supply unit is adapted to provide a laminar stream of gas along the area of the 3D printing surface. It was noted that the inventive method can be especially beneficially utilized to detect deviations from such laminar gas flow and accordingly adapt the gas supply unit to provide a laminar gas flow for a subsequent 3D printing process. This especially allows to prevent undesired disturbances of a powder surface to be processed based on turbulent gas streams. The gas supply unit can, for example, contain multiple nozzles or blades being controllable allowing to modify the gas flow. Be adapting the corresponding controllable elements of the gas supply unit it becomes possible to remove turbulences of the gas stream.

According to further embodiments it is preferred that the method contains the steps of
- detecting a cooling pattern resulting from the gas pattern, wherein the cooling pattern is provides a temperature distribution in direction of the gas flow,
- detecting irregular cooling in direction of the gas stream,
- identifying deviations from a laminar flow of the gas stream based on irregularities of the cooling in direction of the gas stream. Identifying such irregularities allows to easily detect turbulences resulting in such irregularities with little effort and especially excluding smoke or chemical substances rendering the gas flow visible, however, providing the risk of contaminating the 3D manufacturing chamber.

According to further embodiments it is preferred that the method contains adapting the gas stream based on the identified deviations from a laminar flow of the gas stream to provide a more laminar gas stream. For example, the gas supply unit can be provided with a combination of at least one nozzle and at least one movable element at its outlet. Utilizing an adaption of the opening of the nozzle and the outlet opening the flow of the gas stream can be adapted to adapt the gas stream. Using the data acquired using the inventive method allows to control the gas supply unit and use available means or means introduced during an upgrade to influence the gas flow accordingly.

According to further embodiments it is preferred that the temperature measured within the area of the 3D printing area is utilized to acquire data with regard to the gas flow provided by the gas supply unit, wherein the data with regard to the gas flow is utilized to improve simulations of 3D printing processes using the 3D printing device. Acquiring the data provided by the inventive method allows to significantly improve such simulations by providing such data being highly relevant for more sophisticated simulations being, however, otherwise not available.

According to further embodiments it is preferred that the temperature measured within the area of the 3D printing area is utilized to acquire data with regard to the gas flow provided by the gas supply unit, wherein the data with regard to the gas flow provided by the gas supply unit is utilized to identify areas providing a similar temperature profile. Typically, it is preferred to utilize data regarding areas providing similar temperature profiles to place similar components to be printed in such areas. For example, in case several small components are to be printed they can be placed in areas providing such similar cooling resulting from the gas stream. Also, multiple parts of a single component can be placed in such areas by placing and turning the component accordingly allowing to provide a highly controlled manufacturing of such parts of a component. For example, highly detailed parts of the component being subject to very

According to further embodiments it is preferred that the step of measuring a temperature within the area of the 3D printing surface while providing a gas stream through the gas supply unit is performed for an area of the area of the 3D printing surface at least twice, wherein at least two different gas flows are provided by the gas supply unit for said area during the multiple temperature measurements. It was noted that providing different gas streams allows to identify otherwise hard to spot problems especially taking into account historic data. Surprisingly, it was noted that testing, for example, different configurations of the gas supply unit also without historic data allows to easily identify, for example, malfunctions of regulation elements contained in the gas supply unit.

According to further embodiments it is preferred that the temperature profile of at least one measurement is utilized to adapt manufacturing instructions, wherein the manufacturing instructions are utilized in the 3D printer to manufacture the component. For example, such adaption of the manufacturing instructions can be adaptions of the process parameters influencing the energy introduced during the 3D printing. Herein, such process parameters can be, for example, the power of a laser utilized to melt the powder layer or to remelt a previous melted powder to provide a required microstructure. Adapting the manufacturing instructions, for example, at a central processing unit allows to significantly decrease the required processing power of the control device of the specific 3D printing device. Said control device only has to execute the provided manufacturing instructions. This is surprisingly beneficial, for example, to implement such method on commonly available 3D printing devices.

According to further embodiments it is preferred that the 3D printing surface is adapted to receive a powder simulating surface, wherein the powder simulating surface provides a rough surface, preferably, wherein the powder simulating surface provides a surface roughness like a powder surface consisting of a particle size D₅₀ being selected from the range from 5µm to 100µm, more preferred from 10µm to 90pm, even more preferred from 12pm to 70pm. The term "D_{X}" as used herein like D₁₀ or D₉₀ refers to the particle size at which X wt.-% of the particles provide at most this particle size utilizing volume average particle size distribution. For example, a D₁₀ of 30µm characterizes that 10 wt.-% of the particles provide a particle size of 30µm or less utilizing volume average particle size distribution. The determination of the D₁₀ is, for example, realized using laser granulometry utilizing a particle size measurement device of the company Quantachrome (device: Cilas 1064). The measurement is performed according to the manufacturer specifications. For this purpose, 1.5g of the powder material is dispersed in 100ml ethanol, treated for 300 seconds in an ultrasonic bath (device: Sonorex IK 52, company Bandelin) and then placed in the sample preparation cell of the measuring device using a Pasteur pipette and measured several times. The resulting average values are formed from the individual measurement results. The evaluation of the scattered light signals is carried out according to the Fraunhofer method of measurement.

According to further embodiments it is preferred that the powder simulating surface of the base plate consists of a non-metal. For example, such powder simulating surface can consist of a ceramic or organic polymer. Such powder simulating surface is especially beneficial to provide thin powder simulating surfaces with a very homogenous thickness. Corresponding powder simulating provide a very beneficial reliable heat transfer and emissivity.

According to further embodiments it is preferred that the powder simulating surface contains non-metal particles partially embedded in a non-metal layer. For example, such powder simulating surface can contain organic polymer particles partially embedded in an organic polymer like a resin to provide a surface being similar to the powder surface utilized during additive manufacturing.

According to further embodiments it is preferred that the powder simulating surface of the base plate consists of a metal or metal alloy providing a heat conductivity of at least 70 W/(m × K), more preferred at least of at least 80 W/(m × K), even more preferred at least of at least 100 W/(m × K). It was noted that such material is especially suitable to mass manufacture corresponding powder simulating surfaces. Typical deviations of the thickness of correspondingly manufactured powder simulating surfaces are typically rendered irrelevant based on the higher heat conductivity of such material.

According to further embodiments it is preferred that the powder simulating surface of the base plate consists of a metal or metal alloy providing a heat conductivity of at most 450 W/(m × K), more preferred at least of at most 400 W/(m × K), even more preferred at least of at most 300 W/(m × K). Surprisingly, it was noted that corresponding high heat conductivities are less beneficial, but typically render the data acquired by typical IR sensor less trustworthy. Utilizing highly sensitive IR sensors to compensate for such problem is typically not required and only provides only increased costs and not associated benefits.

According to further embodiments it is preferred that the temperature measured within the area of the 3D printing surface is the temperature of the 3D printing surface or the temperature of a powder simulating surface. It was noted that the data acquired according to such methods can be especially usefully utilized.

According to further embodiments it is preferred that the method contains the step of utilizing data with regard to the temperature drop on the powder simulating surface to adapt a gas flow of the gas supply unit to prevent a disturbance of a powder surface during a subsequent 3D printing process. Using the data acquired using the inventive method allows to adapt the gas supply unit and the gas flow provided to prevent such event impairing such manufacturing process.

According to further embodiments it is preferred that the method contains the step of cooling the gas during the measurement of the temperature of the 3D printing surface of the build. Cooling the gas flowing out of the gas supply unit allows to further influence the temperature during the manufacturing process and, for example, influence the microstructure of the resulting material. Herein, the inventive method enables to gain insight in such influence and adapt the manufacturing instruction by such means significantly increasing the possibilities provided by an 3D printing device.

According to further embodiments it is preferred that the step of measuring the temperature within the area of the 3D printing surface is performed multiple times to provide a development of the heat distribution and its changes in correlation with the time. For example, it is typically preferred to monitor the heat loss after a gas flow of the gas flow unit has been started or has been changed. For example, such change can be a change of the strength of the gas flow or a change of the temperature of the gas flowing. Investing the additional time to gain such insight is surprisingly beneficial to gain insight in the 3D printing method and means to influence it.

According to further embodiments it is preferred that the method includes simulating temperature profiles based on different gas flows to identify characteristics of the real gas flow provided by the gas supply unit. Herein, such simulation can also take into account historic data stored in a database to improve the results of the simulation and/or verify the results of the simulation. Utilizing such means, for example, allows to acquire possible solutions to solve certain problems without simulations and excessive calculations effectively cutting down the required process power to further improve the 3D printing processes subsequently.

According to a further aspect the present invention refers to a computer program product, tangibly embodied in a machine-readable storage medium, including instructions operable to cause a computing entity to execute an inventive method.

According to a further aspect the present invention refers to a base plate, wherein the base plate contains at least one heat distribution layer located within a 3D printing surface of the base plate, at least one heat conduction layer below the at least one heat distribution layer, and at least one heating layer below the at least one heat conduction layer, wherein the heating layer is adapted to convert electricity into heat, wherein the heat conduction layer is adapted to transmit heat from the heating layer to the heat distribution layer, wherein the heat distribution layer is adapted to distribute the heat evenly across the 3D printing surface of the base plate. Such base plates are especially useful to realize the inventive method, as they provide an easy to control and reliable heat provision to the 3D printing surface area to be monitored to acquire the corresponding data. Herein, such heat distribution layer can be realized as constriction of the heat flow to enable realizing an equilibrium to form on the surface while the heat energy from the source and the cooling effect of the gas matches.

According to further embodiments it is preferred that the base plate contains a thermal insulation layer below the heating layer. For many applications it is preferred that such insulation layer provides a significant thickness like at least 10% of the average thickness of the base plate within the 3D printing surface of the base plate. This allows to suppress a significant heat transfer to lower parts reducing the thermal stress of different parts of the 3D printing device being a surprisingly big problem. For example, it was noted that this allows to avoid significantly decreased time period between maintenance actions to prevent damages on the 3D printing device. The term "average thickness" as used herein refers to the arithmetic mean of the biggest and lowest thickness within the specified area unless explicitly specified otherwise.

According to further embodiments it is preferred that the base plate provides a metallic layer below the insulation layer. Typically, it is preferred that such metallic layer provides a thickness of at least 20%, more preferred at least 30%, of the average thickness of the base plate within the 3D printing surface of the base plate. Providing such metallic layer consisting of a metal or metal alloy is surprisingly beneficial for long term application. Especially, it was noted that corresponding base plates provide a significantly increased long term stability and minor mistakes regarding their handling typically result in no damages.

According to further embodiments it is preferred that the heating layer contains resistor stripes arrange next to each other. Typically, it is preferred that the resistor stripes are physically contacting heat distribution stripes arranged above the resistor stripes. Such heat distribution stripes consist of a material providing a high heat conductivity to distribute the heat generated by the resistor stripes.

According to further embodiments it is preferred that the heating layer contains soldering pads arranged next to each other. Such design provides a very simple yet effective possibility to realize a heating layer. Herein, it is preferred that the soldering pads are physically contacting heat distribution stripes arranged above the soldering pads. Typically, it is preferred that such soldering pads provide essentially the same, preferable the same, electrical potential. Such heat distribution stripes consist of a material providing a high heat conductivity to distribute the heat generated by the resistor stripes.

According to further embodiments it is preferred that the heating layer contains resistor stripes arrange next to each other, wherein the heating layer contains at least five, more preferred at least seven, even more preferred at least nine, resistor stripes are contained in the heating layer.

According to further embodiments it is preferred that the heat distribution layer provides a thickness of at least 1%, more preferred at least 2%, even more preferred at least 4%, of the average thickness of the base plate within the 3D printing surface of the base plate.

According to further embodiments it is preferred that the heat distribution layer provides a thickness of at most 1 mm, more preferred at most 0.5 mm, even more preferred at most 0.2 mm. Surprisingly, it was noted that, for example, thicker heat distribution layers are typically not beneficial to improve the heat distribution, while mass manufacturing problems like thickness deviations reducing the overall effect often increase in such cases. Therefore, limiting the thickness in such way surprisingly increases the reliability of corresponding base plates.

According to further embodiments it is preferred that the heat conduction layer provides a thickness of at least 0.2 mm, more preferred at least 0.5 mm, even more preferred at least 1 mm. It was noted that heat conduction layers providing a lower thickness, for example, typically provide a significantly decreased reliability over the long term and during very specific circumstances. For example, in case of very inhomogeneous heating resulting from significantly deviating gas flows and/or less optimized control proceedings of the heating system corresponding thinner heat conduction layers typically tend to suffer from problems like incorrect readings or, for example, deformation of the base plate or a part of the base plate or a damage of the heating element contained in the heating layer. Thus, providing base plates with such minimum value allows to very easily provide a base plate being more resistant to such problems and requiring less effort to realize the inventive system.

According to further embodiments it is preferred that the heat distribution layer provides a thickness of at most 10%, more preferred at most 8%, even more preferred at most 7%, of the average thickness of the base plate within the 3D printing surface of the base plate.

According to further embodiments it is preferred that the heat conduction layer provides a thickness of at least 5%, more preferred at least 8%, even more preferred at least 10%, of the average thickness of the base plate within the 3D printing surface of the base plate.

According to further embodiments it is preferred that the heat distribution layer provides a thickness of at most 30%, more preferred at most 25%, even more preferred at most 22%, of the average thickness of the base plate within the 3D printing surface of the base plate.

According to further embodiments it is preferred the heat conduction layer and the heating layer are enclosed in enclosure material, wherein the enclosure material also provides the heat distribution layer and the thermal insulation layer. Utilizing a low heat conduction material like a glass fiber containing resin allows to very easily provide the required functionality, while the encapsulation provided herewith allows to securely prevent short cuts from the heating layer other damages in this context.

According to a further aspect the present invention refers to a 3D printing device containing a base plate, a gas supply unit and an IR sensor, wherein the base plate contains a heating device and a 3D building surface, wherein the heating device is adapted to provide a defined temperature of the 3D printing surface of the base plate, wherein the gas supply unit is adapted to provide a gas flow near the base plate, wherein IR sensor is adapted to monitor the temperature of the 3D printing surface of the base plate. Typically, it is preferred that such 3D printing device contains an inventive base plate.

According to further embodiments it is preferred that the gas supply unit is adapted provide an adaption of a gas flow within at least one specific area of the area of the 3D printing surface.

According to a further aspect the present invention refers to a control device of an 3D printing device, wherein the control device is adapted to execute an inventive method or an inventive computer program product.

According to a further aspect the present invention refers to an upgrade kit containing an inventive control device.

According to a further aspect the present invention refers to a use of a temperature profile of a surface within the area of the 3D printing surface acquired by an inventive method, wherein the temperature profile is utilized to adapt a 3D printing process and/or a gas flow provided by the gas supply unit.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

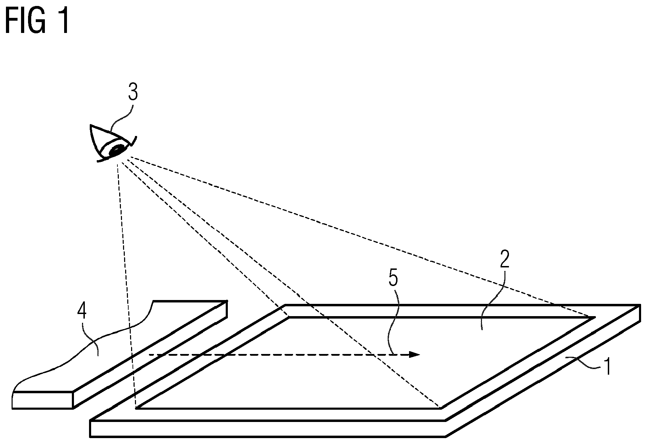

Figure 1 shows a schematic sideview of an inventive base plate 1 utilized in an inventive 3D printing device. The base plate 1 is attached to a mounting system provided in the 3D printing device. The center area of the base plate 1 provides a 3D printing surface 2 located in the middle area of the base plate 1. Said 3D printing surface 2 provides an emissivity within the area of the 3D printing surface 2 being around 0.8. The height of the 3D printing surface 2 within the 3D printing device is chosen to equal the height of the surface of a powder layer to be processed during the manufacturing process utilizing the 3D printing device.

The 3D printing surface 2 contains a powder simulating surface providing surface characteristics like a metal powder layer utilized during additive manufacturing. In the base plate 1 a heating device is integrated enabling to heat up the 3D printing surface 2 to a defined temperature. The defined temperature of the 3D printing surface 2 is locally lowered based on the gas stream originating from the gas supply unit 4 located on the side of the base plate 1. The cooling scheme resulting from the gas flow 5 passing the 3D printing surface 2 area is detected and evaluated by a computer program product with regard to the exact localization and magnitude. To provide an improved cooling scheme a continuous heating of the base plate 1 is provided, wherein the strength of the heating inside the base plate 1 it adapted to allow a slow cool down of the 3D printing surface 2 area to avoid deviations resulting from temporary irregularities of the gas flow 5. The monitoring of the temperature within the 3D printing surface area 2 is performed by an IR sensor 5 located above the base plate 1.

The cooling scheme acquired is automatically evaluated by the control unit of the 3D printing device utilizing the inventive computer program product. For example, an irregular cooling in direction of the gas flow 5 indicates a turbulent gas flow 5. An inhomogeneous cooling perpendicular to the gas flow 5 indicates deviations of the gas flow 5 along the prolonged outlet of the gas supply unit 4. The gas supply unit 4 contains multiple means like nozzles and movable blades allowing to redirect, decrease and increase parts of the gas flow 5 to homogenize the flow. This allows to provide a laminar gas flow 5 along the 3D printing surface 2 area. In case no laminar flow can be achieved the deviations of the cooling is evaluated whether it influences a subsequent manufacturing process. For example, minor deviations within area not to be subject of 3D printing or only printing low quality parts can be neglected while deviations in area required to be printed with very high preciseness triggers a maintenance request to review the gas supply unit 4 and automatically exchanges print orders within the 3D printing facility to acquire products to be printed without problem. Simultaneously, the problematic product is either postponed or transferred to a different 3D printing device. This allows to enable a high quality printing of the products while making best use of a fleet of 3D printing devices available.

Additionally, the cooling scheme can be utilized to identify areas providing a comparable cooling. Such information can be beneficially utilized to distribute a plurality of products to be printed in areas of similar cooling. This allows to significantly reduce problems during mass manufacturing of products using such 3D printing device. It was noted that corresponding even minor deviations result in significant deviations between such mass manufactured products easily requiring a time consuming verification post processing evaluation to guarantee a safe functioning of the products.

Furthermore, the detected cooling resulting from the gas flow 5 is evaluated with regard to a cooling factor of the stream within the area of the 3D printing surface 2. Said local cooling factor is utilized during a later 3D printing process to adapt an energy input resulting from the 3D printing. This allows to tailor the cooling process. Especially, it was noted that minor interruptions of the printing process resulting in a prolonged period until the next powder layer is applied to be processed can be evaluated with regard to potential too high decrease of the printed areas requiring a higher energy input when printing the subsequent layer.

Depending on the specific product to be printed minor deviations of the cooling scheme can be furthermore compensated by adapting the manufacturing instructions. For example, the energy introduced by a layer or energy beam is increased or decreased for a specific location during the manufacturing process. Surprisingly, it was noted that the manufacturing instructions can be modified taking into account the acquired data to adapt to such situation. This significantly reduces the required processing power required by the control device of the 3D printing device compared to instantly adapting generic manufacturing instructions during the manufacturing process. This is especially useful to implement such method on commonly available 3D printing devices being modified to realize the inventive method, as corresponding control devices typically provide a very limited processing power.

To modify an existing 3D printing device to enable the inventive method an upgrade kit is provided. Preferably, such upgrade kit contains an inventive control device that can be used to replace an existing control device or to be included in addition to an existing control device. Providing a control device being able to work along an existing control device is especially cost efficient to execute the inventive computer program product and provide additional information to the already available control device without impairing its function. The inventive computer program product is preferably at least partially also available on the preexisting control device to adapt the control of the 3D printing device.

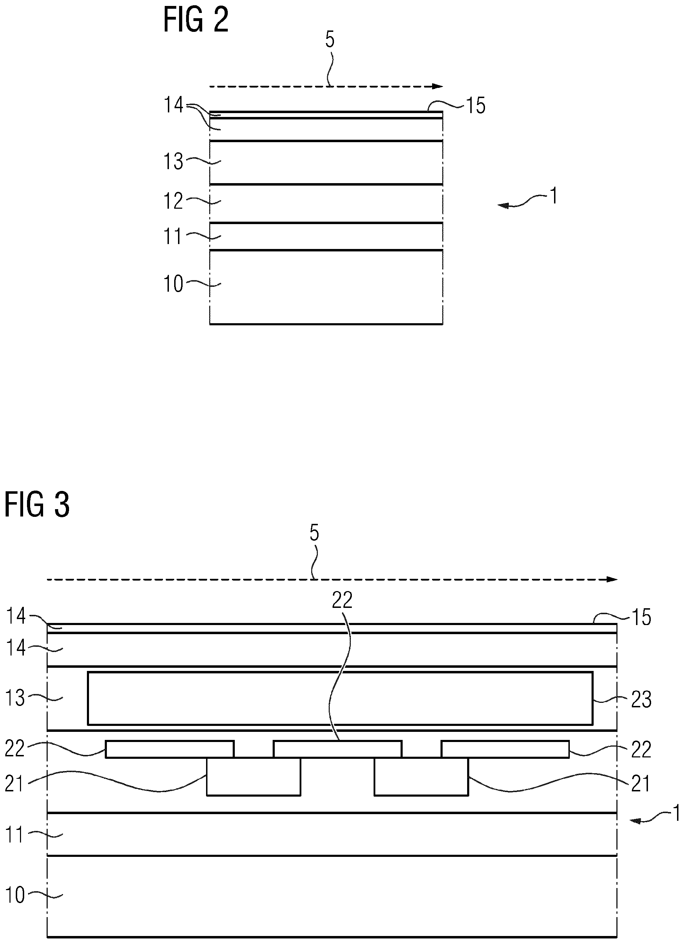

Figure 2 shows a schematic cross section through the 3D printing surface area of the base plate 1 shown in figure 1. The cross section shows a layerwise arrangement within the base plate 1. The foundation of the base plate 1 is provided by a base layer 10 made of metal and providing a mechanical stability to prevent deformations of the base plate 1 during the attachment and detachment processes over time. Above the base layer 10 an insulation layer 11 is located preventing a significant heat flow to the base layer 10 and into the 3D printing device the base plate 1 is attached to. Above the insulation layer 11 a heating layer 12 is located to provide the temperature required to execute the inventive method. On top of the heating layer 12 a heat conduction layer 13 is provided to transfer the thermal energy from the heating layer 12 to the heat distribution layer 14. Herein, the heat is already partially distributed over the heat conduction layer 13, however, no even distribution is achieved by the heat conduction layer 13 alone.

The even temperature of the 3D printing surface area is resulting from the heat distribution layer 14 providing a low thermal conductivity and high heat capacity. Herein, the powder simulating surface 15 being part of the heat distribution layer 14 also contributes to such effect, however, primarily has the function to provide a surface comparable to the surface of a powder layer utilized during 3D printing. The powder simulating surface 15 contains particles consisting of an organic polymer being embedded into a different organic polymer being a resin in this case. After applying the resin on top of the other part of the heat distribution layer 14 such particle material is distributed on top of the resin resulting in said particle adhering to it. The gas flow 5 passing the powder simulating surface 15 provides a cooling being very comparable the cooling during 3D printing.

Figure 3 shows a schematic cross section through the 3D printing surface area of the base plate 1 shown in figure 1, wherein specific functional elements contained in the layers of figure 2 are shown. In more detail, the content of the heating layer 12 and the heat conduction layer 13 are shown in more detail.

The heating layer 12 contains stripes of resistance heating element 21s arrange next to each other within the heating layer 12. Current passing the resistance heating element 21s create heat by means of the resistance converting the electrical energy to thermal energy. Next to the resistance heating element 21s heat distribution stripes 22 are arranged. The heat distribution stripes 22 are electrically isolated from the resistance heating element 21s as they are also consisting of metal and should not redirect the flow of electrical energy. However, the material between the heat distribution stripes 22 and the resistance heating element 21s allows to transfer the heat created away from the resistance heating element 21s. This increases the speed of heating up as well as reduces the longterm thermal stress of the resistance heating element 21s. This surprisingly significantly increases the lifetime of the base plate 1.

Above the heat distribution stripes 22 a heat conduction plate 23 is enclosed in the material of the base plate 1. Said heat conduction plate 23 provides a high heat conductivity. The example shown contains an aluminum plate. However, to further improve the heat conductivity, for example, a copper plate can be utilized. This allows to transfer the heat from the heat distribution stripes 22 to the heat distribution layer 14. Providing a heat conduction layer 13 extending below the whole 3D printing surface area allows to provide a homogeneous heat source for the whole heat distribution layer 14 to further improve the homogeneity of the temperature of the 3D printing surface area.

The present invention was only described in further detail for explanatory purposes. However, the invention is not to be understood being limited to these embodiments as they represent embodiments providing additional benefits to solve specific problems or fulfilling specific needs. The scope of the protection should be understood to be only limited by the claims attached.

## Claims

1. Method of utilizing a 3D printer,
wherein the method contains the step of providing a 3D printer containing a base plate, a gas supply unit and an IR sensor,
wherein the base plate contains a heating device and a 3D building surface,
wherein the heating device is adapted to provide a defined temperature of the 3D printing surface of the base plate, wherein the gas supply unit is adapted to provide a gas flow near the base plate,
wherein IR sensor is adapted to monitor a temperature within an area of the 3D printing surface of the base plate,
wherein the method contains the step of measuring the temperature within the area of the 3D printing surface to provide a temperature profile while providing a gas stream through the gas supply unit.

2. Method according to claim 1, wherein the base plate provides an emissivity within the area of the 3D printing surface being selected from the range from 0.5 to 1.

3. Method according to any of claims 1 to 2, wherein the method contains the step of continuously heating the 3D printing surface during the measurement of the temperature within the area of the 3D printing surface.

4. Method according to any of claims 1 to 3,
wherein the method contains the step of determining a local cooling factor of the gas stream within the area of the 3D printing surface,
wherein the local cooling factor is utilized during a later 3D printing process to adapt an energy input resulting from the 3D printing.

5. Method according to any of claims 1 to 4, wherein the method contains the steps of
- detecting a cooling pattern resulting from the gas pattern, wherein the cooling pattern is provides a temperature distribution in direction of the gas flow,
- detecting irregular cooling in direction of the gas stream,
- identifying deviations from a laminar flow of the gas stream based on irregularities of the cooling in direction of the gas stream.

6. Method according to any of claims 1 to 5,
wherein the temperature measured within the area of the 3D printing area is utilized to acquire data with regard to the gas flow provided by the gas supply unit,
wherein the data with regard to the gas flow provided by the gas supply unit is utilized to identify areas providing a similar temperature profile.

7. Method according to any of claims 1 to 6,
wherein the temperature profile of at least one measurement is utilized to adapt manufacturing instructions,
wherein the manufacturing instructions are utilized in the 3D printer to manufacture the component.

8. Method according to any of claims 1 to 7,
wherein the temperature measured within the area of the 3D printing surface is the temperature of the 3D printing surface or the temperature of a powder simulating surface.

9. Method according to any of claims 1 to 8,
wherein the step of measuring the temperature within the area of the 3D printing surface is performed multiple times to provide a development of the heat distribution and its changes in correlation with the time.

10. Computer program product, tangibly embodied in a machine-readable storage medium, including instructions operable to cause a computing entity to execute a method according to any of claims 1 to 9.

11. Base plate adapted to be utilized in a method according to any of claims 1 to 9, wherein the base plate contains at least one heat distribution layer located within a 3D printing surface of the base plate, at least one heat conduction layer below the at least one heat distribution layer, and at least one heating layer below the at least one heat conduction layer,
wherein the heating layer is adapted to convert electricity into heat,
wherein the heat conduction layer is adapted to transmit heat from the heating layer to the heat distribution layer, wherein the heat distribution layer is adapted to distribute the heat evenly across the 3D printing surface of the base plate.

12. 3D printing device adapted to realize a method according to any of claims 1 to 9,
wherein the 3D printing device contains a base plate, a gas supply unit and an IR sensor,
wherein the base plate contains a heating device and a 3D building surface,
wherein the heating device is adapted to provide a defined temperature of the 3D printing surface of the base plate, wherein the gas supply unit is adapted to provide a gas flow near the base plate,
wherein IR sensor is adapted to monitor a temperature within an area of the 3D printing surface of the base plate.

13. Control device of an 3D printing device, wherein the control device is adapted to execute a method according to any of claims 1 to 9 or a computer program product according to claim 10.

14. Upgrade kit containing a control device according to any of claims 1 to 9.

15. Use of a temperature profile of a surface within the area of the 3D printing surface acquired by a method according to any of claims 1 to 8,
wherein the temperature profile is utilized to adapt a 3D printing process and/or a gas flow provided by the gas supply unit.
